# FASCICULE DE BREVET EUROPEEN

(11) **EP 0 811 541 B1**
(45) Date de publication et mention de la délivrance du brevet: **16.08.2000**
(21) Numéro de dépôt: 97490013.6
(22) Date de dépôt: 22.05.1997
(51) Int. Cl.: B61F 5/50, G01G 19/08

(54) **Dispositif de pesée pour boggie et boggie pourvu de ce dispositif**
Drehgestellwägevorrichtung und Drehgestell versehen mit einer solchen Vorrichtung
Weighing device for bogie and bogie provided with such a device

(30) Priorité: 07.06.1996 FR 9607313
(43) Date de publication de la demande: 10.12.1997
(73) Titulaire: ARBEL FAUVET RAIL S.A., F-59500 Douai (FR)
(72) Inventeur: Ven Jean Michel, 59800 Lille (FR)
(74) Mandataire: Ecrepont, Robert

(56) Documents cités:
- EP-A- 0 386 939
- DE-A- 4 402 528
- US-A- 4 248 318

## Description

L'invention se rapporte à un dispositif de pesée pour boggie ferroviaire.

Elle se rapporte également au boggie pourvu du dit dispositif.

Le freinage d'un véhicule dépend notamment de la charge déplacée et des forces qu'elle exerce sur chacune des roues au moment du freinage.

Un freinage excessif est à éviter car, outre un manque de confort dû à une décélération excessive, il pourrait provoquer un blocage de roue ce qui entraînerait une déformation locale de la bande de roulement de cette roue et un freinage insuffisant pourrait évidemment avoir des conséquences graves.

Dans le transport ferroviaire, pour contrôler l'intensité du freinage sur un boggie, on effectue au moins périodiquement une mesure de la charge appliquée sur chaque boggie.

Cette mesure est nécessaire car, même si la commande de freinage est unique, la charge appliquée sur chaque boggie est variable.

A cet effet, on utilise un dispositif de pesée comprenant un détecteur de charge appelé couramment détendeur.

Ce détecteur est notamment sensible à la variation de charge que subissent les ressorts de suspension.

Avec les dispositifs connus à ce jour, voir p. ex. le US-A-4 248 318, cette mesure de charge s'effectue sur une seule roue de chaque boggie.

Cette mesure unique est liée, d'une part, au coût du détecteur de charge et de son circuit et, d'autre part, aux difficultés qu'il y aurait à prévoir un système prenant en compte des mesures opérées sur deux roues diagonalement opposées voire sur les quatre roues du boggie.

Il résulte de cette mesure unique une adaptation du freinage qui, en certaines circonstances, peut être mauvaise.

Il peut, en effet, arriver, par exemple dans un virage, que la pesée soit réalisée alors que la roue est momentanément délestée ou surchargée, de sorte que la puissance du freinage déterminée par la pesée n'est pas appropriée.

Un des résultats que l'invention vise à obtenir est un dispositif de pesée pour véhicule ferroviaire qui permette une mesure conforme à la charge effectivement supportée par le boggie.

A cet effet, l'invention a pour objet un dispositif de pesée du type précité comprenant un détecteur de charge sensible à la variation de charge et un moyen d'application de la charge effective sur le détecteur, ce dispositif présentant les caractéristiques de la revendication 1.

L'invention sera bien comprise à l'aide de la description ci-après faite à titre d'exemple non limitatif en regard du dessin ci-annexé qui représente schématiquement :

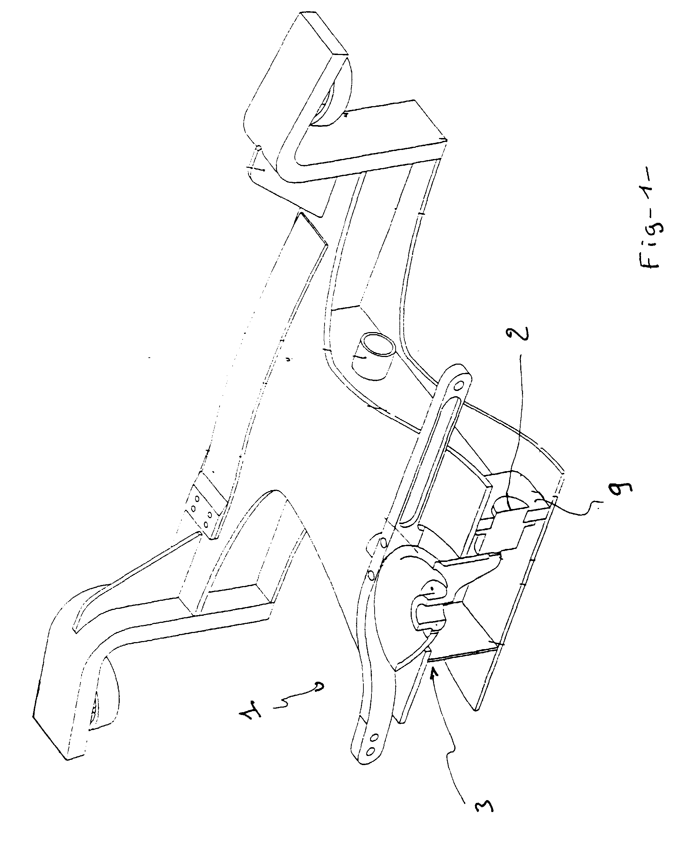

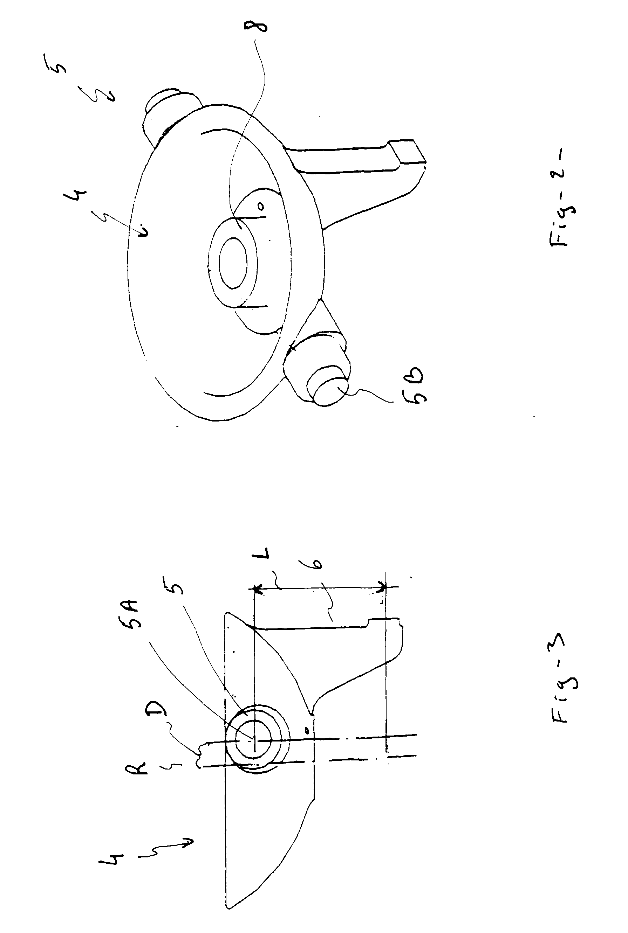

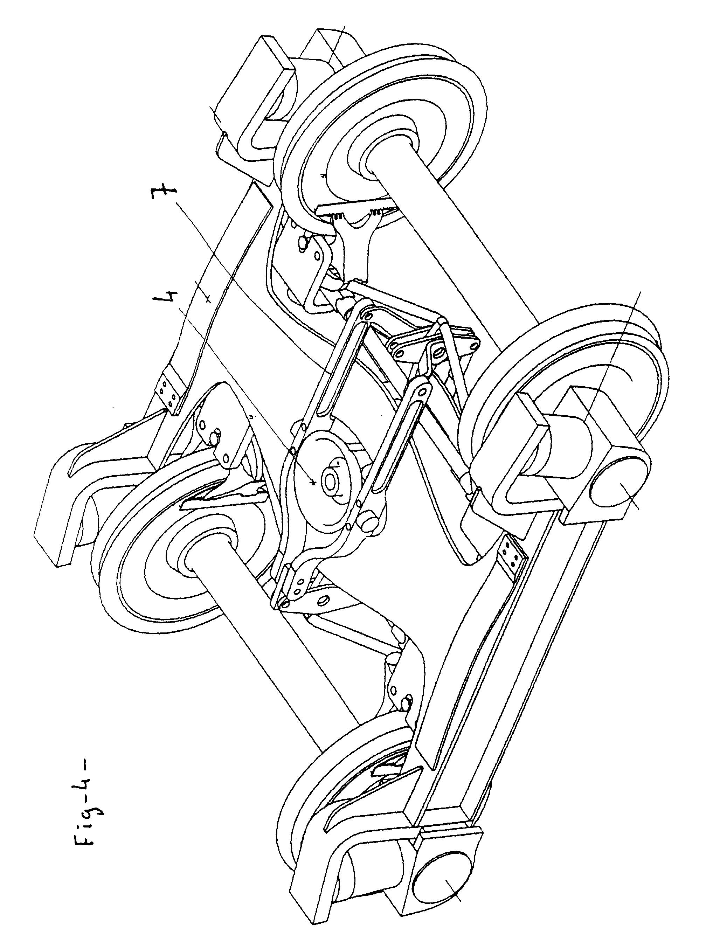

- figure 1 : une vue en écorché d'un boggie,
- figure 2 : une vue en perspective d'un détail du dispositif de pesée,
- figure 3 : une vue de côté de détail de la figure 2,
- figure 4 : un boggie vu en perspective.

En se reportant au dessin, on voit que, pour moduler la puissance de freinage en fonction de la charge que supporte un boggie, on utilise un dispositif 1 de pesée.

Classiquement, ce dispositif de pesée comprend:
- un détecteur 2 de charge qui est sensible à la variation de charge et
- un moyen 3 d'application de la charge effective du boggie sur le détecteur.

Selon une caractéristique de l'invention, le dispositif de pesée comprend :
- un moyen 4 d'appui pour pivot de la charge s'appliquant sur le boggie qui, situé au centre du polygone de sustentation et de rotation du boggie, est par des moyens 5 d'articulation articulé avec le chassis du boggie selon un axe 5A d'articulation horizontal et transversal au sens de déplacement conventionnel du dit boggie et déporté par rapport au centre R de rotation du boggie de sorte que la charge crée un couple de rotation autour de l'axe 5A d'articulation et,
- un bras 6 fixé sur le moyen d'appui qui, s'étendant dans un plan perpendiculaire à l'axe d'articulation et contenant l'axe longitudinal du boggie, sollicite par son extrémité libre le détecteur de charge.

Avantageusement, le moyen d'appui est une coupelle dont la concavité est tournée vers le haut pour supporter la face convexe d'un pivot.

La longueur L du bras 6 et le déport D de l'axe 5A d'articulation de la coupelle déterminent le rapport entre la charge réelle appliquée sur la coupelle et celle exercée sur le détecteur et il suffit d'intégrer ce rapport lors du calcul de la puissance de freinage.

La hauteur de l'axe 5A d'articulation par rapport au fond de la coupelle 4 est sensiblement identique à la hauteur du centre de réaction horizontale déterminé à partir des composantes horizontales qui s'exercent sur la coupelle.

Cela évite la réaction de cabrage au moment du freinage.

Les moyens d'articulation comprennent deux tourillons 5B guidés en rotation dans des moyens d'articulation complémentaires.

Avantageusement, les tourillons 5B précités font office de point fixe pour une timonerie 7 de frein lorsque le boggie est équipé d'une timonerie de frein.

Le détecteur est porté par une plaque 9 mise en forme et fixée sur la traverse du chassis du boggie.

La coupelle 4 constitue l'un des éléments complémentaires de l'articulation entre le boggie et une plateforme située au dessus.

Ainsi, elle présente des moyens 8 d'association avec la pièce de pivotement que présente la charge.

## Revendications

1. Dispositif de pesée pour boggie ferroviaire comprenant :
- un détecteur (2) de charge qui est sensible à la variation de charge et
- un moyen (3) d'application de la charge effective du boggie sur le détecteur,
**CARACTERISE** en ce qu'il comprend :
- une coupelle (4) dont la concavité est tournée vers le haut pour supporter la face convexe du pivot de la charge s'appliquant sur le boggie qui, situé, au centre du polygone de sustentation et de rotation du boggie, laquelle coupelle est par des moyens (5) d'articulation articulé avec le chassis du boggie selon un axe (5A) d'articulation horizontal et transversal au sens de déplacement conventionnel du dit boggie et déporté par rapport au centre (R) de rotation du boggie de sorte que la charge crée un couple de rotation autour de l'axe (5A) d'articulation et,
- un bras (6) fixé sur le moyen d'appui qui, s'étendant dans un plan perpendiculaire à l'axe d'articulation et contenant l'axe longitudinal du boggie, sollicite par son extrémité libre le détecteur de charge.

2. Dispositif de pesée pour boggie selon la revendication 1 **caractérisé** en ce que la hauteur de l'axe (5A) d'articulation par rapport au fond de la coupelle (4) est sensiblement identique à la hauteur du centre de réaction horizontale déterminé à partir des composantes horizontales qui s'exercent sur la coupelle.

3. Dispositif de pesée pour boggie selon la revendication 1 **caractérisé** en ce que les moyens d'articulation comprennent deux tourillons (5B) guidés en rotation dans des moyens d'articulation complémentaires.

4. Dispositif de pesée pour boggie selon la revendication 3 **caractérisé** en ce que les tourillons (5B) font office de point fixe pour une timonerie (7) de frein lorsque le boggie est équipé d'une timonerie de frein.

5. Dispositif de pesée pour boggie selon la revendication 1 **caractérisé** en ce que le détecteur est porté par une plaque (9) mise en forme et fixée sur la traverse du chassis du boggie.

6. Dispositif de pesée pour boggie selon la revendication 1 **caractérisé** en ce que la coupelle (4) constitue l'un des éléments complémentaires de l'articulation entre le boggie et une plateforme située au dessus.

7. Boggie ferroviaire **caractérisé** en ce qu'il est pourvu d'un dispositif de pesée selon l'une quelconque des revendications 1 à 6.

## Patentansprüche

1. Wiegevorrichtung für Drehgestelle von Schienenfahrzeugen, welche folgendes umfaßt:
- einen Lastgeber (2), welcher auf Laständerungen anspricht, und
- eine Einrichtung (3) zum Aufbringen der effektiven Last des Drehgestells auf den Lastgeber,
dadurch **GEKENNZEICHNET**, daß sie folgendes aufweist:
- ein Schalenteil (4), dessen Höhlung nach oben gekehrt ist, zum Auflegen der konvexen Fläche des Drehzapfens der Last, die auf das Drehgestell einwirkt, welcher sich in der Mitte des Unterstützungs- und Drehvielecks des Drehgestells befindet, wobei das Schalenteil mit Hilfe von Anlenkeinrichtungen (5) am Rahmen des Drehgestells entlang einer horizontalen und quer zur üblichen Bewegungsrichtung des Drehgestells verlaufenden Anlenkachse (5A) angelenkt und gegenüber dem Drehmittelpunkt (R) des Drehgestells in der Weise versetzt ist, daß die Last ein Drehmoment um die Achse (5A) erzeugt, und
- daß ein an der Abstützeinrichtung befestigter Arm (6), der sich in einer zur Anlenkachse senkrecht stehenden Ebene erstreckt und die Längsachse des Drehgestells umfaßt, mit seinem freien Ende den Lastgeber beaufschlagt.

2. Wiegevorrichtung für Drehgestelle nach Anspruch 1, dadurch **gekennzeichnet**, daß die Höhe der Anlenkachse (5A) relativ zum Boden des Schalenteils (4) im wesentlich identisch mit der Höhe des horizontalen Reaktionszentrums ist, das ausgehend von den horizontalen, auf das Schalenteil einwirkenden Komponenten bestimmt ist.

3. Wiegevorrichtung für Drehgestelle nach Anspruch 1, dadurch **gekennzeichnet**, daß die Anlenkeinrichtungen zwei Lagerzapfen (5B) aufweist, welche drehbeweglich in komplementären Anlenkeinrichtungen geführt sind.

4. Wiegevorrichtung für Drehgestelle nach Anspruch 3, dadurch **gekennzeichnet**, daß die Lagerzapfen (5B) als Festpunkt für ein Bremsgestänge (7) dienen, wenn das Drehgestell mit einem Bremsgestänge ausgerüstet ist.

5. Wiegevorrichtung für Drehgestelle nach Anspruch 1, dadurch **gekennzeichnet**, daß der Lastgeber über eine geformte Platte (9) gelagert ist, welche auf dem Querträger des Drehgestellrahmens befestigt ist.

6. Wiegevorrichtung für Drehgestelle nach Anspruch 1, dadurch **gekennzeichnet**, daß das Schalenteil (4) eines der komplementären Elemente zur Anlenkung zwischen dem Drehgestell und einer darüber befindlichen Plattform bildet.

7. Drehgestell für Schienenfahrzeuge, dadurch **gekennzeichnet**, daß es eine Wiegevorrichtung nach einem der Ansprüche 1 bis 6 aufweist.

## Claims

1. A weighing device for a railway bogie, comprising:
- a load detector (2) sensitive to variations in load, and
- a means (3) for applying the effective load of the bogie to the detector,
characterised in that it comprises:
- a concave dish (4) which is upwardly open in order to support the convex face of the pivot of the load applied to the bogie and which is located in the centre of the polygon of lift and rotation of the bogie, the dish being articulated, by articulation means (5), with the bogie frame about a horizontal axis (5A) of articulation transverse to the conventional direction of movement of the said bogie and offset relative to the centre (R) of rotation of the bogie in such a manner that the load produces a rotational force about the axis (5A) of articulation, and
- an arm (6) which is fixed to the supporting means and,
extending in a plane perpendicular to the axis of articulation and containing the longitudinal axis of the bogie, acts upon the load detector with its free end.

2. A weighing device for a bogie according to claim 1, characterised in that the height of the axis (5A) of articulation relative to the bottom of the dish (4) is substantially identical to the height of the centre of horizontal reaction determined on the basis of the horizontal components exerted on the dish.

3. A weighing device for a bogie according to claim 1, characterised in that the articulation means comprise two pins (5B) rotationally guided in complementary articulation means.

4. A weighing device for a bogie according to claim 3, characterised in that the pins (5B) serve as a fixed point for brake linkage (7) when the bogie is fitted with brake linkage.

5. A weighing device for a bogie according to claim 1, characterised in that the detector is carried by a shaped plate (9) fixed to the crosspiece of the bogie frame.

6. A weighing device for a bogie according to claim 1, characterised in that the dish (4) constitutes one of the complementary components of the articulation between the bogie and a platform arranged thereabove.

7. A railway bogie, characterised in that it is provided with a weighing device according to any one of claims 1 to 6.
